# EUROPÄISCHE PATENTSCHRIFT

(11) **EP 0 396 187 B1**
(45) Veröffentlichungstag und Bekanntmachung des Hinweises auf die Patenterteilung: **07.12.1994**
(21) Anmeldenummer: 90201064.4
(22) Anmeldetag: 01.05.1990
(51) Int. Cl.: G11B 15/20, G11B 15/18

(54) **Gerät zum Aufzeichnen von Informationssignalen**
Apparatus for recording of information signals
Appareil pour enregistrer des signaux informatiques

(30) Priorität: 05.05.1989 AT 1074/89
(43) Veröffentlichungstag der Anmeldung: 07.11.1990
(73) Patentinhaber: Philips Electronics N.V., 5621 BA Eindhoven (NL)
(72) Erfinder: Czonka, Viktor, NL-5656 AA Eindhoven (NL)
(74) Vertreter: van der Kruk, Willem Leonardus

(56) Entgegenhaltungen:
- EP-A- 0 170 246
- DE-A- 3 533 961
- PATENT ABSTRACTS OF JAPAN, unexamined applications, P Sektion, Band 10, Nr.111, 25. April 1986 THE PATENT OFFICE JAPANESE GOVERNMENT Seite 79 P 451

## Beschreibung

Die Erfindung betrifft ein Gerät zum Aufzeichnen von Informationssignalen auf einem Aufzeichnungsträger, in dem eine Betriebsart "Informationssignalgesteuerte Aufnahme" einschaltbar ist und das zum Antreiben des Aufzeichnungsträgers einen Motor und eine von dem Motor antreibbare Antriebseinrichtung aufweist, die mindestens zwei aneinanderdrückbare, kraftschlüssig zusammenwirkende Antriebsteile aufweist, die bei eingeschalteter Betriebsart "Informationssignalgesteuerte Aufnahme" ständig aneinandergedrückt sind, und das weiters einen Informationssignaldetektor aufweist, der während des Auftretens eines Informationssignales ein Detektionssignal an eine Motorsteuerschaltung abgibt, die ein Steuersignal zum Einschalten des Motors erzeugt, das bei eingeschalteter Betriebsart "Informationssignalgesteuerte Aufnahme" den Motor bei Auftreten des Detektionssignales sofort einschaltet und bei Ausbleiben des Detektionssignales während einer vorgegebenen Zeitspanne, die in der Größenordnung von normalen Unterbrechungen in den Informationssignalen liegt, eingeschaltet hält und erst nach Ablauf der vorgegebenen Zeitspanne abschaltet.

Bei einem solchen im Handel erhältlichen bekannten Gerät, das insbesondere zum Aufzeichnen von Sprachsignalen vorgesehen ist, weist die Antriebseinrichtung für den als Magnetband ausgebildeten Aufzeichnungsträger eine rotierend antreibbare Antriebswelle aus Stahl auf, an die das Magnetband beim Aufzeichnen von Sprachsignalen in einer Betriebsart "Sprachsignalgesteuerte Aufnahme" mit einer an die Antriebswelle federnd angedrückten Andruckrolle, die umfangsseitig einen Gummibelag aufweist, angedrückt wird. Die Andruckrolle bleibt in der Betriebsart "Sprachsignalgesteuerte Aufnahme" ständig an die Antriebswelle angedrückt, dies auch dann, wenn der Benützer des Gerätes einen Diktiervorgang für eine längere Zeitspanne unterbricht oder überhaupt vergißt, die Betriebsart "Sprachsignalgesteuerte Aufnahme" nach einem Diktiervorgang wieder auszuschalten. In diesem Fall drückt sich dann die Antriebswelle in den Gummibelag der Andruckrolle ein, was zu einer bleibenden Deformierung der Andruckrolle führt, die sich bei der weiteren Verwendung des Gerätes in Bezug auf einen gleichmäßigen einwandfreien Antrieb des Magnetbandes störend auswirkt.

Die Erfindung hat sich zur Aufgabe gestellt, die vorstehend angeführten Schwierigkeiten zu vermeiden und ein Gerät der eingangs angeführten Gattung so auszubilden, daß die Bildung von solchen bleibenden Deformierungen in zumindest einem der in einer Betriebsart "Informationssignalgesteuerte Aufnahme" ständig aneinandergedrückten Antriebsteile verhindert ist. Hierfür ist die Erfindung dadurch gekennzeichnet, daß die Motorsteuerschaltung eine Impulserzeugungseinrichtung aufweist, die nach dem Abschalten des Motors nach dem Ausbleiben des Detektionssignales während der vorgegebenen Zeitspanne und bei weiterhin eingeschalteter Betriebsart "Informationssignalgesteuerte Aufnahme" und bei weiterem Ausbleiben des Detektionssignales in vorgegebenen Zeitabständen wiederholend kurze Steuersignalimpulse erzeugt, mit denen der Motor kurzzeitig eingeschaltet wird. Auf diese Weise ist erreicht, daß bei eingeschalteter Betriebsart "Informationssignalgesteuerte Aufnahme" auch dann, wenn der Benützer des Gerätes einen Aufnahmevorgang für eine längere Zeitspanne unterbricht, der Motor wiederholend kurzzeitig eingeschaltet wird und folglich die aneinandergedrückten Antriebsteile wiederholend kurzzeitig in Drehung versetzt werden, so daß die Antriebsteile aufeinanderfolgend in unterschiedliche Relativlagen zueinander gebracht werden und daher nie während einer längeren Zeitspanne in derselben Relativlage zueinander aneinandergedrückt werden. Hiedurch ist auf einfache Weise verhindert, daß es zu einer bleibenden Deformierung zumindest eines der Antriebsteile kommt. Somit können keine durch eine solche bleibende Deformierung bedingte Störungen beim Antreiben des Aufzeichnungsträgers auftreten und es ist stets ein gleichmäßiger einwandfreier Antrieb des Aufzeichnungsträgers gewährleistet.

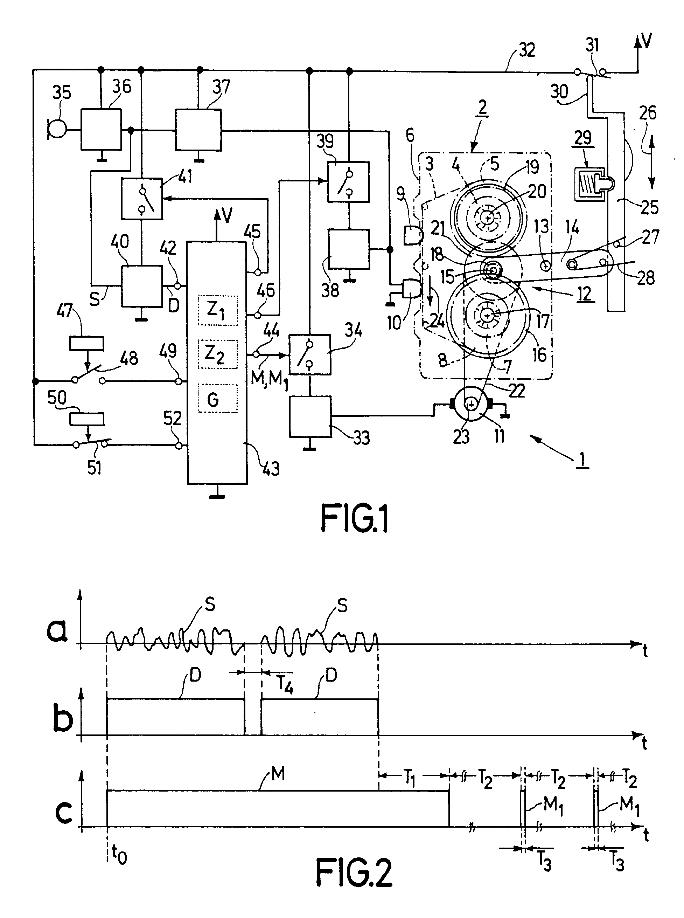

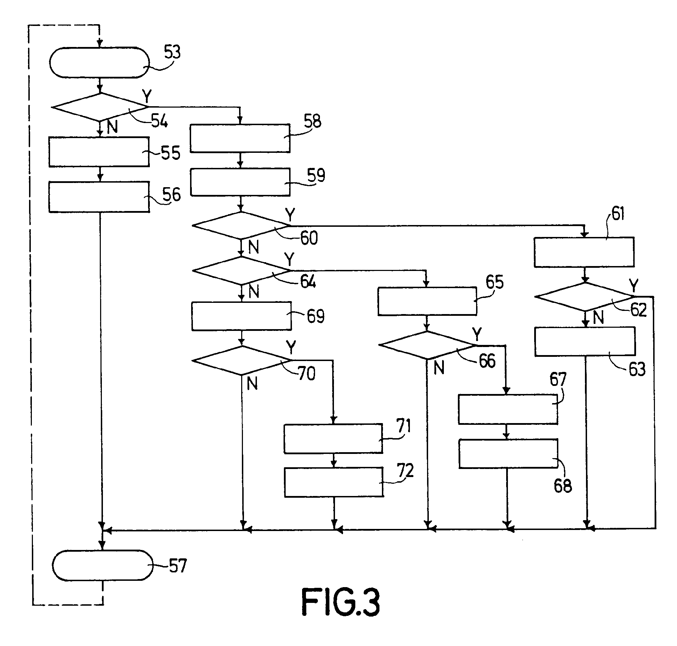

Die Erfindung wird im folgenden anhand eines in den Zeichnungen dargestellten Ausführungsbeispieles, auf das dieselbe jedoch nicht beschränkt sein soll, näher beschrieben. Die Fig. 1 zeigt schematisch ein Gerät zum Aufzeichnen von Sprachsignalen auf einem in einer Kassette untergebrachten bandförmigen Aufzeichnungsträger, der beim Aufzeichnen von Sprachsignalen mittels einer von einem Motor angetriebenen Antriebseinrichtung antreibbar ist, die zwei aneinanderdrückbare, kraftschlüssig zusammenwirkende Antriebsteile aufweist . Die Fig. 2 zeigt zeitliche Verläufe von Signalen, die im Gerät gemäß Fig.1 auftreten. Die Fig.3 zeigt ein Flußdiagramm eines Programmablaufes, der in einem im Gerät gemäß Fig.1 enthaltenen Mikroprozessor abgearbeitet wird, um den Motor dieses Gerätes in einer Betriebsart "Sprachsignalgesteuerte Aufnahme" einzuschalten.

In Fig.1 ist schematisch ein Gerät 1 zum Aufzeichnen von Diktaten entsprechenden Sprachsignalen dargestellt, das beispielsweise als Taschendiktiergerät ausgebildet ist. In das Gerät 1 ist eine Kassette 2 einsetzbar, die in Fig.1 schematisch mit strichpunktierten Linien dargestellt ist. In der Kassette 2 ist ein magnetisierbarer bandförmiger Aufzeichnungsträger 3 untergebracht, der im folgenden kurz als Magnetband 3 bezeichnet ist. Das Magnetband 3 ist in der Kassette 2 von einem auf einen Abwickelkern 4 aufgewickelten Bandwickel 5 längs einer vorderen langen Kassettenschmalseite 6 zu einem auf einen Aufwickelkern 7 aufgewickelten Bandwickel 8 geführt. Durch zwei nicht dargestellt Öffnungen in der Kassettenschmalseite 6 hindurch treten ein im wesentlichen durch einen Permanentmagneten gebildeter Löschmagnetkopf 9 und ein Magnetkopf 10 zum Aufzeichnen und Wiedergeben von Sprachsignalen mit dem Magnetband 3 in Wirkverbindung. Mit dem Gerät ist auch das Wiedergeben von Sprachsignalen möglich, wobei aber in Fig.1 die hiefür erforderlichen Geräteteile nicht dargestellt sind, da diese in vorliegendem Zusammenhang nicht wichtig sind.

Zum Antreiben des Magentbandes 3 weist das Gerät 1 einen Motor 11 und eine von dem Motor 11 antreibbare Antriebseinrichtung 12 auf. Die Antriebseinrichtung 12 weist einen hebelartigen, um eine Welle 13 verschwenkbaren Träger 14 auf, an dessen einem Ende eine aus Stahl bestehende Antriebswelle 15 drehbar gelagert ist, die zum kraftschlüssigen Zusammenwirken mit einem Reibrad 16 vorgesehen ist, das an seinem Umfang zur Erzielung einer guten Reibwirkung mit einem Gummibelag versehen ist und das mit einem mit dem Aufwickelkern 7 durch die untere Hauptwand der Kassette 2 hindurch in Antriebsverbindung stehenden Aufwickeldorn 17 zum Antreiben des Aufwickelkernes 7 drehfest verbunden ist. Auf die Antriebswelle 15 ist ein Ritzel 18 drehfest aufgesetzt, das zum formschlüssigen Zusammenwirken mit einem Zahnrad 19 vorgesehen ist, das mit einem mit dem Abwickelkern 4 durch die untere Hauptwand der Kassette 2 hindurch in Antriebsverbindung stehenden Abwickeldorn 20 zum Antreiben des Abwickelkernes 4 drehfest verbunden ist. Weiters ist mit der Antriebswelle 15 eine Schwungscheibe 21 drehfest verbunden, die über eine Pese 22 von einem Pesenrad 23 angetrieben wird, das seinerseits auf der Motorwelle des Motors 11 sitzt und auf diese Weise von dem Motor 11 antreibbar ist.

Der Träger 14 ist von einer in Fig.1 nicht dargestellten neutralen Mittellage, in der weder die Antriebswelle 15 mit dem Reibrad 16 noch das Ritzel 18 mit dem Zahnrad 19 zusammenwirkt, in entgegengesetzten Schwenkrichtungen wahlweise in eine von zwei Betriebspositionen verschwenkbar. In der einen Betriebsposition, die in Fig.1 dargestellt ist, ist die Antriebswelle 15 an das Reibrad 16 angedrückt. Diese Betriebsposition entspricht der Betriebsart "Normaler Vorlauf", in der das Magnetband 3 durch Antreiben des Aufwickelkernes 7 an dem Magnetkopf 10 in Richtung des Pfeiles 24 entlanggeführt wird, wobei mit dem Magnetkopf 10 das Aufzeichnen von Sprachsignalen erfolgen kann. In der anderen Betriebsposition, die in Fig.1 nicht dargestellt ist, wirkt das Ritzel 18 mit dem Zahnrad 19 zusammen. Diese Betriebsposition entspricht der Betriebsart "Rücklauf", in der durch Antreiben des Abwickelkernes 4 das Magnetband 3 entgegen der Richtung des Pfeiles 24 angetrieben wird, um das Magnetband 3 auf den Abwickelkern 4 zurückzuspulen, wobei in diesem Fall der Magnetkopf 10 außer Funktion bleibt und der Löschkopf 9 auf nicht näher dargestellte Weise vom Magnetband 3 wegbewegt und daher wirkungslos wird.

Zum Verstellen des Trägers 14 ist ein verschiebbar geführter Betriebsarten-Schieber 25 vorgesehen, der aus einer in Fig.1 nicht dargestellten Ausschaltlage, in der der Träger 14 seine neutrale Mittellage einnimmt, in entgegengesetzten Richtungen entsprechend dem Doppelpfeil 26 wahlweise in eine von zwei Einschaltlagen verschiebbar ist. Vom Schieber 25 steht ein Stift 27 ab, der zwischen den beiden Schenkeln einer am Träger 14 abgestützten Schenkelfeder 28 liegt und mit dem beim Verstellen des Schiebers 25 über jeweils einen Schenkel der Schenkelfeder 28 der Träger 14 verschwenkt wird, wie dies Fig.1 für eine Einschaltlage zeigt. In der in Fig.1 dargestellten Einschaltlage des Schiebers 25, die der Betriebsart "Normaler Vorlauf" entspricht, wird der Schieber 25 mittels einer schematisch dargestellten Rasteinrichtung 29 festgehalten. Von einem Ende des Schiebers 25 steht ein L-förmiger Fortsatz 30 ab, mit dem in der Betriebsart "Normaler Vorlauf" ein Schalter 31 geschlossen wird, um eine Versorgungsspannung V an eine Versorgungsspannungsleitung 32 anzuschalten, von der her eine Reihe von Schaltungsteilen des Gerätes 1 mit der Versorgungsspannung V versorgbar sind, worauf nachfolgend noch näher eingegangen wird. Es sei erwähnt, daß auch in der der Betriebsart "Rücklauf" entsprechenden Einschaltlage des Schiebers 25, in der dann der Träger 14 in der anderen Richtung wie in Fig.1 aus seiner neutralen Mittellage verschwenkt ist, von dem Schieber 25 ein Schalter betätigt wird, um den Motor 11 in Funktion zu setzen, was aber in Fig.1 nicht dargestellt ist, da dies im vorliegenden Zusammenhang nicht wichtig ist.

Das Gerät 1 weist zum Speisen des Motors 11 eine eine Drehzahlregelstufe enthaltende Motorspeiseschaltung 33 auf, die über eine durch ein Steuersignal in einen leitenden Zustand steuerbare Schaltstufe 34 an die Versorgungsspannungsleitung 32 anschaltbar ist. Bei leitender Schaltstufe 34 und an die Leitung 32 angeschalteter Versorgungsspannung V ist die Motorspeiseschaltung 33 mit der Versorgungsspannung V versorgt und daher eingeschaltet, wobei sie dann den Motor 11 speist, so daß dieser dann auf drehzahlgeregelte Weise angetrieben wird, wobei dann über das Pesenrad 23 und die Pese 22 die Schwungscheibe 21 und die mit dieser in Antriebsverbindung stehenden Geräteteile angetrieben werden.

Weiters weist das Gerät 1 ein Mikrofon 35 auf, dessen Ausgangssignale einer Vorverstärkerschaltung 36 zugeführt werden. Die Vorverstärkerschaltung 36 speist eine Aufnahmesignalverarbeitungsschaltung 37, von der die aufzuzeichnenden Sprachsignale dem Magnetkopf 10 zugeführt werden. Beim Aufzeichnen von Sprachsignalen wird dem Magnetkopf 10 auch ein Vormagnetisierungssignal zugeführt, das mit einem Vormagnetisierungssignal-Oszillator 38 erzeugt wird, der über eine durch ein Steuersignal in einen leitenden Zustand steuerbare weitere Schaltstufe 39 an die Versorgungsspannungsleitung 32 anschaltbar ist. Bei leitender Schaltstufe 39 und an die Leitung 32 angeschalteter Versorgungsspannung V ist der Oszillator 38 mit der Versorgungsspannung V versorgt und daher eingeschaltet, wobei dann der Oszillator 38 ein Vormagnetisierungssignal an den Magnetkopf 10 abgibt.

Weiters weist das Gerät 1 einen Sprachsignaldetektor 40 auf, der über eine durch ein Steuersignal in einen leitenden Zustand steuerbare weitere Schaltstufe 41 an die Versorgungsspannungsleitung 32 anschaltbar ist. Bei leitender Schaltstufe 41 und an die Leitung 32 angeschalteter Versorgungsspannung V ist der Sprachsignaldetektor 40 mit der Versorgungsspannung V versorgt und daher eingeschaltet. Der Sprachsignaldetektor 40 ist an die Vorverstärkerschaltung 36 angeschlossen. Während des Auftretens eines Sprachsignales S, wie dies schematisch in Fig.2a dargestellt ist, gibt der Sprachsignaldetektor 40 ein Detektionssignal D ab, wie dies schematisch in Fig.2b dargestellt ist. Das Detektionssignal D wird einem Eingang 42 eines Mikroprozessors 43 zugeführt, der in diesem Fall unter anderem auch als Motorsteuerschaltung zur Steuerung des Ein- und Ausschaltens des Motors 11 verwendet ist. Der Mikroprozessor 43 ist beim Gerät 1 dauernd an die Versorgungsspannung V angeschaltet. Zum Einschalten des Motors 11 gibt der Mikroprozessor 43 an einem Ausgang 44 desselben ein Steuersignal ab, wie dies beispielsweise in Fig.2c dargestellt ist. Dieses Steuersignal wird der Schaltstufe 34 zugeführt, wodurch die Schaltstufe 34 bei Auftreten dieses Steuersignales in den leitenden Zustand gesteuert wird, so daß während des Auftretens dieses Steuersignales die Motorspeiseschaltung 33 an die Versorgungsspannungsleitung 32 angeschaltet wird. Über einen weiteren Ausgang 45 gibt der Mikroprozessor 43 ein nicht dargestelltes weiteres Steuersignal zum Steuern der Schaltstufe 41 ab, mit der der Sprachsignaldetektor 40 einschaltbar ist, und über einen weiteren Ausgang 46 gibt der Mikroprozessor 43 ein nicht dargestelltes weiteres Steuersignal zum Steuern der Schaltstufe 39 ab, mit der der Oszillator 38 einschaltbar ist.

Zum Einschalten einer Betriebsart "Normale Aufnahme" weist das Gerät 1 eine Taste 47 auf, die beispielsweise als rastende Taste ausgebildet ist und mit der bei ihrer Betätigung ein Schalter 48 geschlossen wird. Der Schalter 48 ist einerseits mit der Versorgungsspannungsleitung 32 und andererseits mit einem weiteren Eingang 49 des Mikroprozessors 43 verbunden. Eine Betätigung der Taste 47 wird daher durch Schließen des Schalters 48 dem Mikroprozessor 43 gemeldet. Wenn dem Mikroprozessor 43 ein Betätigen der Taste 47 zum Einschalten der Betriebsart "Normale Aufnahme" gemeldet wird, gibt in Folge davon der Mikroprozessor an seinen Ausgängen 44 und 46 je ein solches Steuersignal ab, daß die beiden Schaltstufen 34 und 39 dauernd in ihrem leitenden Zustand verbleiben. In diesem Fall gibt der Mikroprozessor 43 an seinem Ausgang 45 kein Steuersignal ab, so daß die Schaltstufe 41 in ihrem nichtleitenden Zustand belassen wird. Auf diese Weise ist die Durchführung der Betriebsart "Normale Aufnahme" vorbereitet.

Wenn nun der Betriebsarten-Schieber 25 aus seiner Ausschaltlage in seine in Fig.1 dargestellte Einschaltlage verstellt wird, dann wird erstens der Träger 14 verschwenkt, wobei die Antriebswelle 15 gegen das Reibrad 16 gedrückt wird, und zweitens der Schalter 31 geschlossen, wobei die Versorgungsspannung V an die Versorgungsspannungsleitung 32 angeschaltet wird und folglich die Vorverstärkerschaltung 36, die Aufnahmesignalverarbeitungsschaltung 37, der Oszillator 38 über die Schaltstufe 39 und die Motorspeiseschaltung 33 über die Schaltstufe 34 mit der Versorgungsspannung V versorgt werden, so daß dann alle zum normalen Aufzeichnen von Sprachsignalen erforderlichen Schaltungsteile eingeschaltet sind und daher ein normales Aufzeichnen von Sprachsignalen in üblicher Weise erfolgen kann.

Zum Einschalten einer Betreibsart "Sprachsignalgesteuerte Aufnahme" weist das Gerät eine weitere Taste 50 auf, die beispielsweise ebenfalls als rastende Taste ausgebildet ist und mit der bei ihrer Betätigung ein weiterer Schalter 51 geschlossen wird. Der weitere Schalter 51 ist einerseits mit der Versorgungsspannungsleitung 32 und andererseits mit einem weiteren Eingang 52 des Mikroprozessors 43 verbunden. Eine Betätigung der weiteren Taste 50 wird daher durch Schließen des weiteren Schalters 51 dem Mikroprozessor 43 gemeldet. Wenn dem Mikroprozessor 43 eine Betätigung der weiteren Taste 50 zum Einschalten der Betriebsart "Sprachsignalgesteuerte Aufnahme" gemeldet wird, dann gibt in Folge davon der Mikroprozessor an seinen Ausgängen 45 und 46 je ein solches Steuersignal ab, daß die beiden Schaltstufen 41 und 39 dauernd in ihrem leitenden Zustand verbleiben. In diesem Fall gibt der Mikroprozessor 43 an seinem Ausgang 44 in Folge der Betätigung der weiteren Taste 50 vorerst kein Steuersignal ab, so daß die Schaltstufe 34 vorerst in ihrem nichtleitenden Zustand verbleibt. Wenn nun der Betriebsarten-Schieber 25 von seiner Ausschaltlage in seine in Fig.1 dargestellte Einschaltlage verstellt wird, dann wird erstens der Träger 14 verschwenkt, wobei die Antriebswelle 15 gegen das Reibrad 16 gedrückt wird, und zweitens der Schalter 31 geschlossen, wobei die Versorgungsspannung V an die Versorgungsspannungleitung 32 angeschaltet wird und folglich die Vorverstärkerschaltung 36, die Aufnahmesignalverarbeitungsschaltung 37, der Oszillator 38 über die Schaltstufe 39 und der Sprachsignaldetektor 40 über die Schaltstufe 41 mit der Versorgungsspannung V versorgt und daher eingeschaltet werden. Die Motorspeiseschaltung 33 wird aber wegen der vorerst noch gesperrten Schaltstufe 34 nicht mit der Versorgungsspannung V versorgt und bleibt daher ausgeschaltet, so daß der Motor 11 nicht angetrieben wird, sondern stillsteht. Auf diese Weise ist die Durchführung der Betriebsart "Sprachsignalgesteuerte Aufnahme" vorbereitet.

Wenn nun ein Benützer des Gerätes 1 in das Mikrofon 35 desselben zu sprechen beginnt, dann treten am Ausgang der Vorverstärkerschaltung 36 Sprachsignale S auf, wie sie in Fig.2a schematisch dargestellt sind und die über die Aufnahmesignalverarbeitungsschaltung 37, die gegebenenfalls eine Signalverzögerungsstufe zum Verzögern der aufzuzeichnenden Sprachsignale enthalten kann, um in der Betriebsart "Sprachsignalgesteuerte Aufnahme" einen Silbenverlust am Beginn des Aufzeichnens von Sprachsignalen zu vermeiden, dem Magnetkopf 10 gemeinsam mit dem vom Oszillator 38 erzeugten Vormagnetisierungssignal zugeführt werden. Die von der Vorverstärkerschaltung 36 abgegebenen Sprachsignale werden auch dem Sprachsignaldetektor 40 zugeführt, der während des Auftretens eines Sprachsignales S ein Detektionssignal D erzeugt, wie dies in Fig.2b dargestellt ist. Das Detektionssignal D wird dem auch als Motorsteuerschaltung vorgesehenen Mikroprozessor 43 an seinem Eingang 42 zugeführt. Der Mikroprozessor 43 erzeugt daraufhin ein Steuersignal M zum Einschalten des Motors 11, wie dies in Fig.2c dargestellt ist. Dieses Steuersignal M gibt der Mikroprozessor 43 an seinem Ausgang 44 an die Schaltstufe 34 ab, die bei Auftreten des Steuersignales M in ihren leitenden Zustand gesteuert wird, so daß dann auch die Motorspeiseschaltung 33 an die Versorgungsspannung V angeschaltet und dadurch eingeschaltet wird, wodurch dann der Motor 11 und folglich auch die Antriebswelle 15 und das Reibrad 16 und dementsprechend das Magnetband 3 angetrieben wird, wobei das Magnetband 3 auf den Aufwickelkern 7 aufgewickelt wird. Dabei werden die dem Magnetkopf 10 zugeführten Sprachsignale S auf dem Magnetband 3 aufgezeichnet. Wie aus Fig.2 erkennbar ist, schaltet das vom Mikroprozessor 43 erzeugte Steuersignal M, das bei im Gerät 1 eingeschalteter Betriebsart "Sprachsignalgesteuerte Aufnahme" erzeugt wird, den Motor 11 bei Auftreten des Detektionssignales D sofort ein und hält den Motor 11 bei Ausbleiben des Detektionssignales D während einer vorgegebenen Zeitspanne T₁, die in der Größenordnung von normalen Unterbrechungen in den Sprachsignalen, wie sie aufgrund von normalen Sprechpausen beim Sprechen von Diktaten auftreten, liegt, eingeschaltet und schaltet den Motor 11 erst nach Ablauf der vorgegebenen Zeitspanne T₁ ab. Die Zeitspanne T₁ kann in der Praxis beispielsweise mit etwa zwei Sekunden festgelegt sein.

Wie aus vorstehendem hervorgeht, sind bei im Gerät 1 eingeschalteter Betriebsart "Sprachsignalgesteuerte Aufnahme" die Antriebswelle 15 und das Reibrad 16 ständig aneinander angedrückt. Dies ist auch dann der Fall, wenn der Benützer des Gerätes 1 bei eingeschalteter Betriebsart "Sprachsignalgesteuerte Aufnahme" einen Diktiervorgang für eine längere Zeitspanne unterbricht oder überhaupt vergißt, die Betriebsart "Sprachsignalgesteuerte Aufnahme" nach einem Diktiervorgang wieder auszuschalten. Um in diesen Fällen ein Eindrücken der aus Stahl bestehenden Antriebswelle 15 in den Gummibelag des Reibrades 16 zu vermeiden, was zu einer bleibenden Deformierung des Gummibelages des Reibrades 16 führen würde, die sich nachfolgend in einem ungleichmäßigen Antreiben des Reibrades 16 und folglich des Magnetbandes 3 auswirken würde, sind nunmehr beim vorliegenden Gerät 1 die nachfolgend beschriebenen Maßnahmen vorgesehen.

Der unter anderem auch als Motorsteuerschaltung verwendete Mikroprozessor 43 weist eine in Fig.1 schematisch mit punktierten Linien angedeutete Impulserzeugungseinrichtung G auf, die nach dem Abschalten des Motors 11 nach dem Ausbleiben des Detektionssignales D während der vorgegegebenen Zeitspanne T₁ und bei weiterhin eingeschalteter Betriebsart "Sprachsignalgesteuerte Aufnahme" und bei weiterem Ausbleiben des Detektionssignales D in vorgegebenen Zeitabständen T₂ wiederholend kurze Steuersignalimpulse mit einer vorgegebenen Zeitdauer T₃ erzeugt, die in Fig.2c mit dem Bezugszeichen M₁ bezeichnet sind und mit denen der Motor 11 kurzzeitig für die vorgegebene Zeitdauer T₃ eingeschaltet wird. Die Zeitabstände T₂ können in der Praxis beispielsweise mit etwa dreißig Sekunden gewählt werden. Die Zeitspannen T₃ können in der Praxis beispielsweise etwa mit 100msec gewählt werden. Beim vorliegenden Gerät 1 weisen die Steuersignalimpulse M₁ stets dieselbe Impulsdauer T₃ auf. Es ist aber auch möglich, die Impulsdauer der Steuersignalimpulse M₁ beispielsweise von einem Zufallsgenerator gesteuert in einem vorgegebenen Zeitbereich variabel zu machen.

Im folgenden ist anhand des in Fig.3 dargestellten Flußdiagrammes ein Programmablauf beschrieben, der im Mikroprozessor 43 des Gerätes gemäß Fig.1 zur Erzeugung des in Fig.2c dargestellten Steuersignales zum Einschalten des Motors 11 abgearbeitet wird. Der Programmablauf ist Teil einer im Mikroprozessor 43 abgearbeiteten Gesamtprogrammschleife, wie dies durch die den Endblock und den Startblock des vorliegenden Flußdiagrammes miteinander verbindende strichlierte Linie in Fig.3 symbolisch angedeutet ist.

Der Programmablauf wird beim Block 53 gestartet. Beim nachfolgenden Block 54 wird geprüft, ob am Eingang 52 des Mikroprozessors 43 die Versorgungsspannung V anliegt, ob also durch Betätigen der Taste 50 der Schalter 51 geschlossen und damit die Betriebsart "Sprachsignalgesteuerte Aufnahme" eingeschaltet wurde. Wenn dies nicht der Fall ist, dann wird danach beim Block 55 ein in Fig.1 schematisch mit punktierten Linien angedeuteter mikroprozessorinterner Zeitzähler Z₁ auf den Wert Null gesetzt. Danach wird beim Block 56 ein weiterer in Fig.1 schematisch mit punktierten Linien angedeuteter mikroprozessorinterner Zeitzähler Z₂ auf den Wert Null gesetzt. Danach wird beim Block 57 dieser Programmablauf beendet und mit der Gesamtprogrammschleife fortgesetzt, im Zuge deren Ablaufes wieder der Block 53 erreicht wird, bei dem der vorliegende Programmablauf gestartet wird.

Wenn der Benützer des Gerätes 1 die Taste 50 zum Einschalten der Betriebsart "Sprachsignalgesteuerte Aufnahme" betätigt, wird dies beim Block 54 festgestellt, wobei dann die Prüfung beim Block 54 ein positives Ergebnis ergibt. In diesem Fall wird danach beim Block 58 der Ausgang 45 des Mikroprozessors 43 auf ein vorgegebenes hohes Potential H gesetzt, wodurch die Schaltstufe 41 zum Einschalten des Sprachsignaldetektors 40 in ihren leitenden Zustand gesteuert wird, so daß der Sprachsignaldetektor 40 eingeschaltet wird. Danach wird beim Block 59 der Ausgang 46 des Mikroprozessors 43 auf das vorgegebene hohe Potential H gesetzt, wodurch die Schaltstufe 39 zum Einschalten des Vormagnetisierungs-Oszillators 38 in ihren leitenden Zustand gesteuert wird, so daß der Oszillator 38 eingeschaltet wird. Danach wird beim Block 60 geprüft, ob am Eingang 42 des Mikroprozessors 43 ein Detektionssignal D, das mit dem Sprachsignaldetektor 40 erzeugt wird, auftritt. Der Einfachheit halber sei angenommen, daß der Benützer sofort nach dem Einschalten der Betriebsart "Sprachsignalgesteuerte Aufnahme" zu sprechen beginnt und folglich der Sprachsignaldetektor 40 ein Sprachsignal S feststellt und dementsprechend ein Detektionssignal D an den Eingang 42 des Mikroprozessors abgibt, welcher Zeitpunkt in Fig.2 mit dem Bezugszeichen t₀ bezeichnet ist. Für diesen Fall hat die Prüfung beim Block 60 ein positives Ergebnis zur Folge, wobei dann der Programmablauf beim Block 61 fortgesetzt wird. Beim Block 61 wird der Zeitzähler Z₁ auf den Wert Null gesetzt. Danach wird geprüft, ob der Motor 11 des Gerätes 1 eingeschaltet ist, was dadurch erfolgt, daß beim Block 62 geprüft wird, ob der Ausgang 44 des Mikroprozessors 43 auf das vorgegebene hohe Potential H gesetzt ist, durch das die Schaltstufe 34 zum Einschalten der Motorspeiseschaltung 33 in ihren leitenden Zustand gesteuert wird. Da der Motor 11 nach dem Einschalten der Betriebsart "Sprachsignalgesteuerte Aufnahme" noch nicht eingeschaltet war, hat die Prüfung beim Block 62 ein negatives Ergebnis zur Folge. Dementsprechend wird danach der Motor 11 eingeschaltet, was dadurch erfolgt, daß beim Block 63 der Ausgang 44 des Mikroprozessors 43 auf das vorgegebene hohe Potential H gesetzt wird, wodurch die Schaltstufe 34 zum Einschalten der Motorspeiseschaltung 33 in ihren leitenden Zustand gesteuert wird, so daß der Motor 11 eingeschaltet wird. Danach wird der Programmablauf beim Block 57 beendet. Solange ein Detektionssignal D weiterhin am Eingang 42 des Mikroprozessors 43 anliegt, werden beim nachfolgenden Durchlaufen dieses Programmablaufes wieder die Blöcke 53, 54, 58, 59, 60, 61 und 62 durchlaufen, wobei nach dem Block 62, bei dem dann die Prüfung ein positives Ergebnis ergibt, weil der Motor 11 bereits eingeschaltet ist, der Programmablauf unmittelbar beim Block 57 beendet wird.

Bei Auftreten einer normalen Sprechpause, wobei dann beispielsweise für eine Zeitspanne T₄, die kleiner als die Zeitspanne T₁ von zwei Sekunden ist, kein Sprachsignal vorliegt und dementsprechend der Sprachsignaldetektor 40 kein Detektionssignal abgibt, wie dies in den Figuren 2a und 2b dargestellt ist, hat beim nachfolgenden Durchlauf dieses Programmablaufes die Prüfung beim Block 60 ein negative Ergebnis zur Folge. In diesem Fall wird dann der Programmablauf beim Block 64 fortgesetzt. Beim Block 64 wird geprüft, ob der Ausgang 44 des Mikroprozessors 43 auf das vorgegebene hohe Potential H gesetzt ist, ob also der Motor 11 eingeschaltet ist. Da aufgrund des zuvor vorliegenden Sprachsignales S der Motor 11 eingeschaltet wurde, führt die Prüfung beim Block 64 zu einem positiven Ergebnis. Dementsprechend wird danach beim Block 65 der Zeitzähler Z₁ zum Zählen freigegeben und derselbe wird unabhängig vom weiteren Programmablauf automatisch entsprechend der ablaufenden Zeit inkrementiert. Danach wird beim Block 66 geprüft, ob der Zählerstand des Zeitzählers Z₁ einen Wert erreicht hat, der der Zeitspanne T₁ von zwei Sekunden entspricht. Wenn dies nicht der Fall ist, wird der Programmablauf beim Block 57 beendet.

Bei dem gemäß dem Figuren 2a und 2b dargestellten angenommenen Fall tritt nach Ablauf der Zeitspanne T₄, die kürzer als die Zeitspanne T₁ von zwei Sekunden ist, wieder ein Sprachsignal S auf, so daß auch wieder ein Detektionssignal D am Eingang 42 des Mikroprozessors 43 auftritt. Daher hat beim nachfolgenden Durchlauf des vorliegenden Programmablaufes die Prüfung beim Block 60 ein positives Ergebnis zur Folge, wonach der Programmablauf wieder über die Blöcke 61 und 62 fortgesetzt wird, wobei beim Block 61 der zuvor beim Block 65 zum Zählen freigegebene Zeitzähler Z₁ wieder auf den Wert Null gesetzt wird. Nach dem Block 62 wird der Programmablauf in diesem Fall beim Block 57 beendet.

Wenn danach der Diktiervorgang für eine längere Zeitspanne unterbrochen wird, wie dies gemäß den Figuren 2a und 2b angenommen ist, jedoch die Betriebsart "Sprachsignalgesteuerte Aufnahme" weiterhin eingeschaltet bleibt, dann wird beim nachfolgenden Durchlauf des Programmablaufes beim Block 60 das Fehlen eines Detektionssignales D festgestellt. Daher wird der Programmablauf beim Block 64 fortgesetzt. Da der Motor 11 noch eingeschaltet ist, was beim Block 64 durch Feststellen des hohen Potentiales H am Ausgang 44 des Mikroprozessors 43 überprüft wird, wird danach der Programmablauf über die Blöcke 65 und 66 fortgesetzt und beim Block 57 beendet. Dies erfolgt so lange, als die Zeitdauer T₁ von zwei Sekunden nach dem Ausbleiben des Sprachsignales S und dem Ausbleiben des Detektionssignales D noch nicht verstrichen ist. Wenn aber nach Verstreichen der Zeitdauer T₁ beim Block 66 festgestellt wird, daß der Zählerstand des beim Block 65 zum Zählen freigegebenen Zeitzählers Z₁ einen Wert aufweist, der der Zeitdauer T₁ von zwei Sekunden entspricht, dann wird der Programmablauf beim Block 67 fortgesetzt. Beim Block 67 wird der Ausgang 44 des Mikroprozessors 43 auf ein vorgegebenes niedriges Potential L gesetzt, wie dies aus Fig.2c ersichtlich ist, was zur Folge hat, daß die Schaltstufe 34 in ihren nichtleitenden Zustand gesteuert wird und daher die Motorspeiseschaltung 33 abgeschaltet und folglich der Motor 11 abgeschaltet wird. Danach wird beim Block 68 der weitere Zeitzähler Z₂ auf den Wert Null gesetzt. Danach wird der Programmablauf beim Block 57 beendet.

Beim nachfolgenden Durchlaufen des Programmablaufes wird bei der Prüfung beim Block 64 festgestellt, daß der Motor 11, der zuvor beim Block 67 abgeschaltet wurde, nun abgeschaltet ist, was beim Block 64 ein negatives Prüfungsergebnis zur Folge hat. Daher wird der Programmablauf nun beim Block 69 fortgesetzt. Beim Block 69 wird der weitere Zeitzähler Z₂ zum Zählen freigegeben und derselbe wird unabhängig vom weiteren Programmablauf automatisch entsprechend der ablaufenden Zeit inkrementiert. Danach wird beim Block 70 geprüft, ob der Zählerstand des weiteren Zeitzählers Z₂ einen Wert erreicht hat, der der Zeitspanne T₂ von dreißig Sekunden entspricht. Solange dies nicht der Fall ist, wird der Programmablauf beim Block 57 beendet. Wird aber beim Block 70 festgestellt, daß der Zählerstand der weiteren Zeitzählers Z₂ einen Wert aufweist, der der Zeitspanne T₂ von dreißig Sekunden entspricht, dann wird der Programmablauf beim Block 71 fortgesetzt. Beim Block 71 wird die mikroprozessorinterne Impulserzeugungseinrichtung G aktiviert, die den Ausgang 44 des Mikroprozessors 43 für eine vorgegebene Zeitspanne T₃ von 100msec auf das hohe Potential H setzt, so daß der Mikroprozessor 43 an seinem Ausgang 44 einen wie in Fig.3c dargestellten Steuersignalimpuls M₁ abgibt. Der Steuersignalimpuls M₁ wird der Schaltstufe 34 zugeführt, wodurch der Motor 11 für die Zeitspanne T₃ von 100msec eingeschaltet wird. Danach wird beim Block 72 der weitere Zeitzähler Z₂ auf den Wert Null gesetzt. Danach wird der Programmablauf beim Block 57 beendet.

Beim nachfolgenden Durchlaufen des Programmablaufes wird beim Block 69 der weitere Zeitzähler Z₂ wieder freigegeben. Danach wird der Programmablauf über den Block 70 fortgesetzt und beim Block 57 beendet. Dies erfolgt so lange, bis wiederum die Zeitspanne T₂ von dreißig Sekunden verstrichen ist, wonach der Zählerstand des weiteren Zeitzählers Z₂ einen der Zeitspanne T₂ entsprechenden Wert aufweist, was dann beim Block 70 festgestellt wird. Dementsprechend wird danach der Programmablauf beim Block 71 fortgesetzt, bei dem wieder mittels der Impulserzeugungseinrichtung G ein Steuersignalimpuls M₁ erzeugt wird. Diese aufeinanderfolgend wiederholende Erzeugung von Steuersignalimpulsen M₁ mittels der Impulserzeugungseinrichtung G beim Block 71 erfolgt so lange, bis der Benützer wieder zu sprechen beginnt oder die Betriebsart "Sprachsignalgesteuerte Aufnahme" ausschaltet.

Wenn der Benützer wieder zu sprechen beginnt, dann wird der Programmablauf zuerst wieder über die Blöcke 53, 54, 58, 49, 60, 61, 62, 63 und 57 und danach über die Blöcke 53, 54, 58, 59, 60, 61, 62 und 57 erfolgen. Wenn danach wieder eine längere Sprechpause folgt, wird der Programmablauf zuerst über die Blöcke 53, 54, 58, 59, 60, 64, 65, 66 und 57 und danach über die Blöcke 53, 54, 58, 59, 60, 64, 65, 66, 67, 68 und 57 erfolgen, wobei in diesem Fall beim Block 68 der Zeitzähler Z₂ wieder auf den Wert Null gesetzt wird, nachdem derselbe, bevor der Benützer wieder zu sprechen begonnen hat, zuvor beim Block 69 zum Zählen freigegeben wurde. Danach wird der Programmablauf zuerst wieder über die Blöcke 53, 54, 58, 59, 60, 64, 69, 70 und 57 und danach über die Blöcke 53, 54, 58, 59, 60, 64, 69, 70, 71, 72 und 57 erfolgen, wobei dann wieder die kurzen Steuersignalimpulse M₁ mit der Impulserzeugungseinrichtung G erzeugt werden. Wenn der Benützer die Betriebsart "Sprachsignalgesteuerte Aufnahme" ausschaltet, dann wird der Programmablauf über die Blöcke 53, 54, 55, 56 und 57 erfolgen.

Wie aus vorstehendem hervorgeht, wird für den Fall, daß im Gerät 1 die Betriebsart "Sprachsignalgesteuerte Aufnahme" eingeschaltet ist, wobei dann die Antriebswelle 15 ständig an das Reibrad 16, und zwar an dessen Gummibelag, angedrückt gehalten ist, und daß während einer längeren Zeitspanne ein Diktiervorgang unterbrochen wird oder überhaupt vergessen wird, die Betriebsart "Sprachsignalgesteuerte Aufnahme" auszuschalten, der Motor 11 des Gerätes 1 wiederholend kurzzeitig eingeschaltet, und zwar für beispielsweise 100msec. Durch dieses kurzzeitige Einschalten des Motors 11 wird aufgrund der vorliegenden Untersetzung zwischen dem Motor 11 und der Antriebswelle 15 die vom Motor 11 her angetriebene Antriebswelle 15 beispielsweise für etwa eine halbe Umdrehung in Drehung versetzt, so daß dadurch das Reibrad 16 nur um einen ganz geringen Winkel verdreht wird. Durch diese geringe Verdrehung des Reibrades 16 wird das Magnetband 3 bei jedem Steuersignalimpuls M₁ nur um ein sehr kleines Stück weitertransportiert, so daß auch dann, wenn dieser impulsweise, intermittierende Antrieb des Magnetbandes über mehrere Stunden hinweg erfolgt, nur ein relativ kurzes Bandstück am Magnetkopf 10 entlang bewegt wird. Durch diese geringen Verdrehungen der Antriebswelle 15 und des von ihr angetriebenen Reibrades 16 werden diese beiden Antriebsteile aufeinanderfolgend in stets unterschiedliche Relativlagen zueinander gebracht, so daß sie nicht über einen längeren Zeitraum in ein und derselben Relativlage zueinander aneinandergedrückt werden. Hiedurch ist auf besonders einfache Weise verhindert, daß es zu einer bleibenden Deformierung des Reibrades 16, nämlich dessen umfangsseitigen Gummibelages, kommt. Somit können beim vorliegenden Gerät keine durch eine solche bleibende Deformierung bedingte Störungen beim Antreiben des Magnetbandes auftreten und es ist stets ein gleichmäßiger einwandfreier Antrieb des Magnetbandes gewährleistet.

Die Erfindung ist nicht auf das vorstehend beschriebene Ausführungsbeispiel beschränkt, sondern kann auch bei anderen Geräten vorteilhaft zur Anwendung kommen. Die Motorsteuerschaltung muß nicht mit Hilfe eines Mikroprozessors ausgeführt sein, sondern kann auch aus diskreten Bauteilen bestehen, wobei dann auch die Impulserzeugungseinrichtung mit diskreten Bauteilen aufgebaut ist. Beim beschriebenen Ausführungsbeispiel weist die Antriebseinrichtung eine Antriebswelle auf, die gegen ein mit einem Wickeldorn drehfest verbundenes Reibrad zum Antreiben des Magnetbandes angedrückt wird. Der Antrieb dieses Reibrades könnte auch über ein mehrstufiges Reibradgetriebe erfolgen, wobei es dann ebenso vorteilhaft ist, die Reibräder des mehrstufigen Reibradgetriebes wiederholend in unterschiedliche Relativlagen zueinander zu bringen, um bleibende Deformierungen der Reibräder zu vermeiden. Auch ist die Erfindung vorteilhaft bei einem Gerät anwendbar, bei dem das Magnetband mit einer unmittelbar mit demselben zusammenwirkenden Antriebswelle, an die das Magnetband mit einer beispielsweise aus Gummi bestehenden Andruckrolle angedrückt wird, angetrieben wird, um die Antriebswelle und die Andruckrolle bei langen Aufzeichnungspausen aufeinanderfolgend in unterschiedliche Relativlagen zueinander zu bringen. Die Erfindung kann auch vorteilhaft in Geräten zum Aufzeichnen von Musksignalen und in Geräten zum Aufzeichnen von digitalen Datensignalen Anwendung finden, wobei dann in der Betriebsart "Informationssignalgesteuerte Aufnahme" das Auftreten der Musiksignale beziehungsweise das Auftreten der digitalen Datensignale mit entsprechenden Signaldetektoren überwacht und festgestellt wird. Der Aufzeichnungsträger muß nicht bandförmig, sondern kann beispielsweise auch kreisscheibenförmig oder manschettenförmig ausgebildet sein.

## Patentansprüche

1. Gerät (1) zum Aufzeichnen von Informationssignalen auf einem Aufzeichnungsträger (3), in dem eine Betriebsart "Informationssignalgesteuerte Aufnahme" einschaltbar ist und das zum Antreiben des Aufzeichnungsträgers einen Motor (11) und eine von dem Motor antreibbare Antriebseinrichtung (12) aufweist, die mindestens zwei aneinanderdrückbare, kraftschlüssig zusammenwirkende Antriebsteile (15,16) aufweist, die bei eingeschalteter betriebsart "Informationssignalgesteuerte Aufnahme" ständig aneinandergedrückt sind, und das weiters einen Informationssignaldetektor (40) aufweist, der während des Auftretens eines Informationssignales (S) ein Detektionssignal (D) an eine Motorsteuerschaltung (43) abgibt, die ein Steuersignal zum Einschalten des Motors erzeugt, das bei eingeschalteter Betriebsart "Informationssignalgesteuerte Aufnahme" den Motor bei Auftreten des Detektionssignales sofort einschaltet und bei Ausbleiben des Detektionssignales während einer vorgegebenen Zeitspanne, die in der Größenordnung von normalen Unterbrechungen in den Informationssignalen liegt, eingeschaltet hält und erst nach Ablauf der vorgegebenen Zeitspanne abschaltet, dadurch gekennzeichnet, daß die Motorsteuerschaltung (43) eine Impulserzeugungseinrichtung (G) aufweist, die nach dem Abschalten des Motors (11) nach dem Ausbleiben des Detektionssignales (D) während der vorgegebenen Zeitspanne und bei weiterhin eingeschalteter Betriebsart "Informationssignalgesteuerte Aufnahme" und bei weiterem Ausbleiben des Detektionssignales in vorgegebenen Zeitabständen wiederholend kurze Steuersignalimpulse (M1) erzeugt, mit denen der Motor (11) kurzzeitig eingeschaltet wird wodurch die kraftschlüssig zusammenwirkenden Antriebsteile (15,16) jeweils in unterschiedliche Relativlagen zueinander gebracht werden.

## Claims

1. An apparatus (1) for recording information signals on a record carrier (3), which apparatus can be set to an "information-signal-controlled recording" mode and, for driving the record carrier, comprises a motor (11) and a drive arrangement (12) drivable by the motor, which drive arrangement comprises at least two drive elements (15, 16) which can be pressed against each other and cooperate non-positively, which drive elements are constantly pressed against each other in the "information-signal-controlled recording" mode, which apparatus further comprises an information signal detector (40) which during the appearance of an information signal (S) supplies a detection signal (D) to a motor control circuit (43), which generates a control signal for switching on the motor, which control signal in the "information-signal-controlled recording" mode immediately switches on the motor upon the appearance of the detection signal, keeps the motor switched on when the detection signal fails to appear during a given time interval of the order of magnitude of normal breaks in the information signals, and does not switch off the motor until the given time interval has elapsed, characterised in that the motor control circuit (43) comprises a pulse generation device (G) which, after the motor (11) has been switched off in the absence of the detection signal (D) during the given time interval, while the "information-signal-controlled recording" mode is still active and the detection signal subsequently fails to appear, generates short control signal pulses (M₁) which recur at given time intervals and which briefly switch on the motor (11), as a result of which the non-positively cooperating drive elements (15, 16) are each time brought into different positions relative to one another.

## Revendications

1. Appareil (1) d'enregistrement de signaux d'informations sur un support d'enregistrement (3), dans lequel un mode de fonctionnement "enregistrement commandé par signaux d'informations" peut être enclenché et qui comporte, pour entraîner le support d'enregistrement, un moteur (11) et un dispositif d'entraînement (12) susceptible d'être entraîné par le moteur, ce dispositif comportant au moins deux organes d'entraînement (15, 16) pouvant être pressés l'un contre l'autre et coopérant dans des conditions de transfert de force, qui sont pressés l'un contre l'autre en permanence lorsque le mode de fonctionnement "enregistrement commandé par signaux d'informations" est enclenché, lequel appareil comporte, en outre, un détecteur de signaux d'informations (40) qui délivre, en présence d'un signal d'information (S), un signal de détection (D) à un circuit de commande de moteur (43) qui produit un signal de commande pour la mise en circuit du moteur, qui, lorsque le mode de fonctionnement "enregistrement commandé par signaux d'informations" est enclenché, met immédiatement le moteur du circuit en présence du signal de détection et qui, en l'absence du signal de détection pendant un intervalle de temps prédéterminé, qui se situe dans l'ordre de grandeur d'interruptions normales des signaux d'informations, maintient le moteur en circuit et ne le met hors circuit qu'à l'expiration de l'intervalle de temps prédéterminé, caractérisé en ce que le circuit de commande de moteur (43) comporte un dispositif générateur d'impulsions (G), qui, après la mise hors circuit du moteur (11) au terme d'une absence du signal de détection (D) pendant l'intervalle de temps prédéterminé ainsi que lors de la poursuite de l'enclenchement du mode de fonctionnement "enregistrement commandé par signaux d'informations" et en l'absence à nouveau de signal de détection, produit de manière répétée des brèves impulsions de signaux de commande (M₁) qui permettent de mettre le moteur (11) en circuit pendant de courts intervalles, grâce à quoi les organes d'entraînement (15, 16) coopérant dans des conditions de transfert de force sont amenés chaque fois dans des positions relatives différentes l'un vis-à-vis de l'autre.
